# EUROPEAN PATENT APPLICATION

(11) **EP 3 517 506 A1**
(43) Date of publication of application: **31.07.2019**
(21) Application number: 18153207.8
(22) Date of filing: 24.01.2018
(51) Int. Cl.: C02F 1/32

(54) **UV WATER TREATMENT PLANT WITH OPEN CHANNEL AND WATER LEVEL CONTROL**

(71) Applicant: Xylem Europe GmbH, 8200 Schaffhausen (CH)
(72) Inventor: MORNINGSTAR, Leroy, Charlotte, NC North Carolina 28273 (US); KAEMMERER, Sven, 32107 Bad Salzuflen (DE); RAPAKA, Madhukar, 32052 1 Warangal (IN)
(74) Representative: Lenzing Gerber Stute

(57) **Abstract**

The invention relates to a UV water treatment plant with a channel (40) having a bottom wall (42) and two side walls (41), in which the to be treated water flows in a flow direction (3) from an upstream end to a downstream end of the channel (40), wherein the channel (40) is designed to have an upper water level (33), the treatment plant having at least one module (1), in which a guide plate (20) is provided in each module (1), the guide plate (20) being interposed between two rows (16, 17) of lamp units (2) of the module (1), the guide plate (20) having a top section (21), two side edges (25) and a bottom edge (26), wherein the bottom edge (26) is below the upper water level (33) and the side edges (25) are spaced apart from the side walls (41) of the channel (40).

## Description

The present invention relates to a UV water treatment plant having the features of the preamble of claim 1.

It has long been known that UV radiation has a germicidal effect and that the naturally occurring UV radiation in sunlight has a disinfecting effect at a sufficient intensity and duration. For the disinfection of water and wastewater, UV radiation is used in small and large plants; see for example patent specification US 1,150,117. Therein a distinction can be made between plants in which UV lamps are arranged in closed channels and such plants in which the UV lamps are arranged in channels that are upwardly open, so-called gutters. The second design with open gutters is used predominately in wastewater technology. The clarified wastewater is therein led through an open channel to the UV plant and there is subjected to UV radiation in order to reduce the number of germs to such an extent that the clarified wastewater can, for example, be introduced into bodies of water. The disinfection power can therein be so high that the introduction into bathing water is admissible.

Wastewater treatment plants are normally constructed such that the water flows from an inlet, through various treatment steps, to an outlet, solely due to gravity, without pumps being required. Therefore it is also aimed, in UV treatment systems in wastewater technology, to keep the flow resistance as low as possible in order to achieve a likewise low pressure loss at the provided flow rate. Such a pressure loss is expressed, during the operation of the plant, in a height difference between the water level in the inlet and the water level in the outlet. It is aimed to keep this height difference as low as possible.

Because of the particularly favorable electrical efficiency, so-called mercury low pressure lamps are predominantly used for the water disinfection, which have an elongated lamp tube made from quartz in which a gas discharge between two electrodes generates the UV radiation. The length of such a lamp amounts to approx. 1.5m. The lamps are inserted into sheath tubes or cladding tubes made from quartz in a watertight manner, for protection against water and for maintenance of the operating temperature, said cladding tubes then in turn being arranged in the water to be disinfected. This assembly of UV lamp and cladding tube is subsequently referred to as a lamp unit.

Commercial plants, such as, for example, those used in the procedure of communal clarification plants, normally have a plurality of lamp units, sometimes over 100 pieces.

In the case of plants having an open channel, there are various arrangements of the lamps. The lamps can lie horizontally and in parallel to the flow direction in the channel (see, for example, patent specification US 4,482,809 and US 6,500,312). The lamps can also lie horizontally and transversely to the flow direction, see patent specification US 4,367,410. Finally, there are plants in which the lamps stand or hang vertically in the channel, for example in patent specifications US 5,660,719 and US 5,332,388.

The systems known from US 7,482,599 B2 and US 8,679,416 B2 disclose modules holding a number of UV lamps in frames, the lamps being orientated transverse to the water flow direction. In US 7,482,599 B2, the lamps are positioned horizontally, while in US 8,679,416 B2, the lamps are arranged vertically. Both embodiments regulate the upper water level in the section of the channel where the modules are with baffle plates spanning the width of the channel. The baffle plates are mounted between the channel walls and are provided in front of, between and behind the modules.

A system in which the lamp units are arranged transverse to the flow and are inclined relative to the flow direction is known from patent specification US 9,126,851. Relative to a vertical orientation, the lamp units in this specification are tilted in the direction of flow so that the upper end and the lower end lie in the same vertical plane parallel to the flow direction. In an embodiment of this system, twelve lamp units are combined and mounted in modules which mechanically hold the UV lamp units in a common frame. Each of the modules is easily retractable from the open channel, to the effect that the maintenance of the modules and the lamps outside of the channel becomes more simple and safer.

In operation, these modules are very efficient in disinfection water using a given amount of electric power. However, further improvement is desirable.

It is therefore an object of the present invention to improve the efficiency of a UV water treatment system having the features of the preamble of claim 1.

This object is achieved by a UV water treatment plant having the features of claim 1.

In a UV water treatment plant with a channel having a bottom wall and two side walls, in which the to be treated water flows in a flow direction from an upstream end to a downstream end of the channel, wherein the channel is designed to have an upper water level, the treatment plant having at least one module which contains
- a number of elongated UV lamp units with an effective UV emission length that are mounted in a head bracket which is close to the upper water level, and a bottom bracket which is close to the bottom wall of the channel, the head bracket and the bottom bracket being connected via a strut structure,
- the effective UV emission length having a lower end near the bottom bracket and an upper end near the head bracket,
- wherein the lamp units are orientated in parallel to one another and extend between the head bracket and the bottom bracket,
- wherein the lamp units are arranged in a spaced relationship towards each other and in at least two rows in each module, which rows are orientated traverse to the flow direction and spaced apart in the flow direction, a guide plate is provided in each module, the guide plate being interposed between two rows of lamp units of the module, the guide plate having a top section, two side edges and a bottom edge, wherein
- the bottom edge is below the upper water level and the side edges are spaced apart from the side walls of the channel. Thus, water close to the top level of the stream can be forced down towards the lamp units even at higher flow rates.

Preferably, each row of lamp units comprises at least three lamp units, so that a wider arrangement and likewise a wider channel opening is possible.

A defined geometry leading to a homogeneous irradiation of the water flow is given, when the upper ends of the effective UV emission lengths of the lamp units of each module essentially lie in a horizontal emission plane. Preferably, the bottom edge of the guide plate is, in vertical direction, at the same level as the horizontal emission plane or below that plane.

When only the top section of the guide plate is mounted to the head bracket and that the side edges and the bottom edge extend freely into the channel, the water stream is forced downwards upon impinging onto the guide plate, and additionally turbulences can be induced at the side edges. Preferably the top section of the guide plate is mounted to the head bracket in a watertight manner.

It is preferred that the guide plate extends, in a direction traverse to the flow direction, between the outer limits of the two lamp units of the module which are closest to the side walls of the channel. However, if the head bracket has side faces which define the width of the module in a direction traverse to the flow direction, and that the side edges of the guide plate are aligned with the side faces of the head bracket so that the guide plate spans the width of the module, the amount of water passing along the sides of the guide plate can be reduced, if necessary.

The distribution of the top level water stream to the lamp units may be positively influenced if the bottom edge of the guide plate is serrated, preferably in a saw tooth pattern.

Preferably the rows of lamp units of a module are staggered traverse to the direction of flow so that, seen in the direction of flow, a downstream lamp unit is positioned to at least partially overlap a gap between two adjacent upstream lamp units, so that laminar flow paths passing through the lamp rows can essentially be avoided. In this case is of further advantage the spacing of the saw tooth pattern matches the distance between the lamp units of the rows.

During operation, when the plant comprises a number of modules which are arranged side by side in the channel, and that the guide plates of two adjacent modules define a gap between them so that they do not come in contact with each other, the guide plates remain cleaner and require less frequent cleaning, if any at all.

Preferably, for handling large volumes of water, a number of modules are arranged neighboring each other transverse to the direction of flow and/or successively in the direction of flow.

It is further preferred if each module has a dedicated drive unit, which is arranged to lift the module out of the channel for service purposes.

Below, an exemplary embodiment of the present invention is described by means of the drawing. Herein are shown:
- Figure 1:: a module in a perspective view from above;
- Figure 2:: the module of Figure 1 in another perspective, more detailed representation;
- Figure 3:: the head section of the module of Figure 2 without covers, electrical parts and without lamps, in a perspective view;
- Figure 4:: the head section of Figure 3 with lamp units in a side view; and
- Figure 5:: a schematic side view illustrating the positioning of one module of a group of four modules in an open channel.

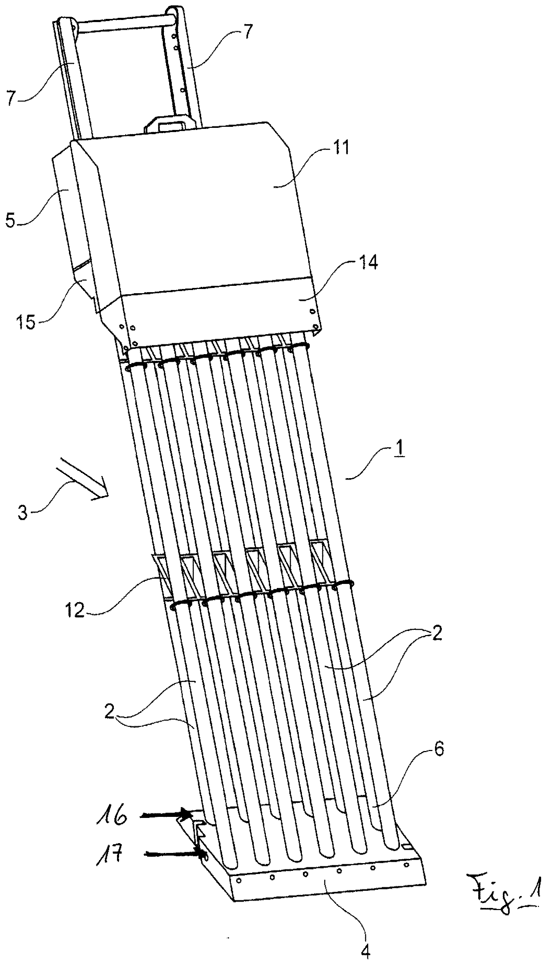

In Figure 1, a module of a UV water treatment plant, referred to throughout with 1, is represented in a perspective view. The module comprises twelve lamp units 2 in total, which each comprise an elongated UV mercury low pressure lamp or an elongated UV excimer lamp that is not represented in greater detail, and a UV transparent sleeve tube enclosing the lamps. The module 1 is provided for installation in a channel in which water flows in the direction of the flow direction 3 indicated by the arrow. The module has a bottom bracket 4, which in operation is positioned at the bottom wall of the channel with its lower side that is not visible in Figure 1. Furthermore, the module 1 has a head bracket 5, as well a longitudinal strut structure 6 which connects the bottom bracket 4 to the head bracket 5. Furthermore, two guide rails 7 are attached to the rearward side of the module in Figure 1, which is facing towards the flow direction 3, said guide rails 7 likewise connecting the bottom bracket 4 and the head bracket 5 and running substantially in parallel to the elongated lamp units 2 and the struts 6. The guide rails 7 protrude over the head bracket 5.

Furthermore, the module 1 is provided with a hood 11 in the region of the head bracket 5, said hood 11 and covers 14, 15 covering the electrical connections of the lamp units 2 from above, above the waterline of the channel. Finally, the module 1 bears a further cleaning device 12, which comprises a bracket and a cleaning ring for each lamp unit 2. The cleaning device 12 is, as is known from the prior art, displaceable in the longitudinal direction of the lamps 2 such that this is cleaned with a stroke along the lamp surface. For this purpose, a drive that is not visible in Figure 1 is provided, preferably pneumatic or hydraulic.

The lamp units 2 are arranged in rows 16, 17 of six lamp units each, wherein the row 16 is upstream (with respect to flow direction 3) of row 17. The struts 6 are between the two rows 16 and 17.

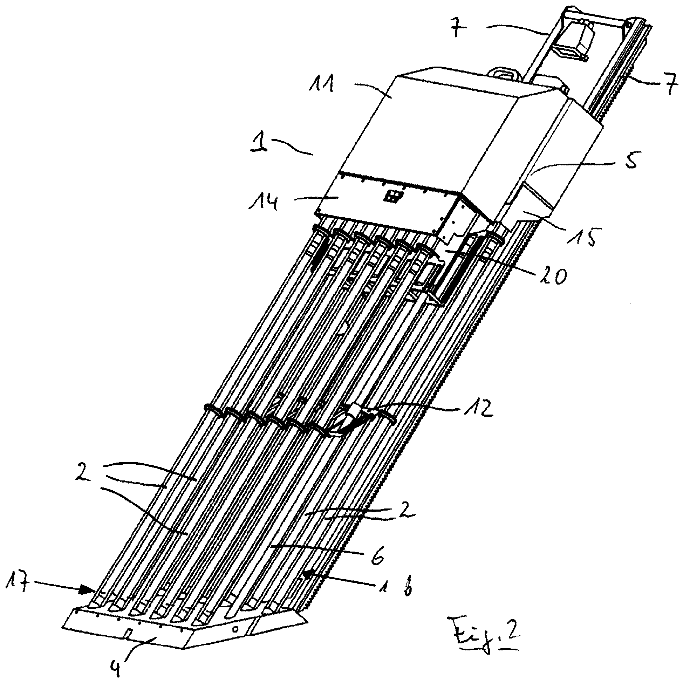

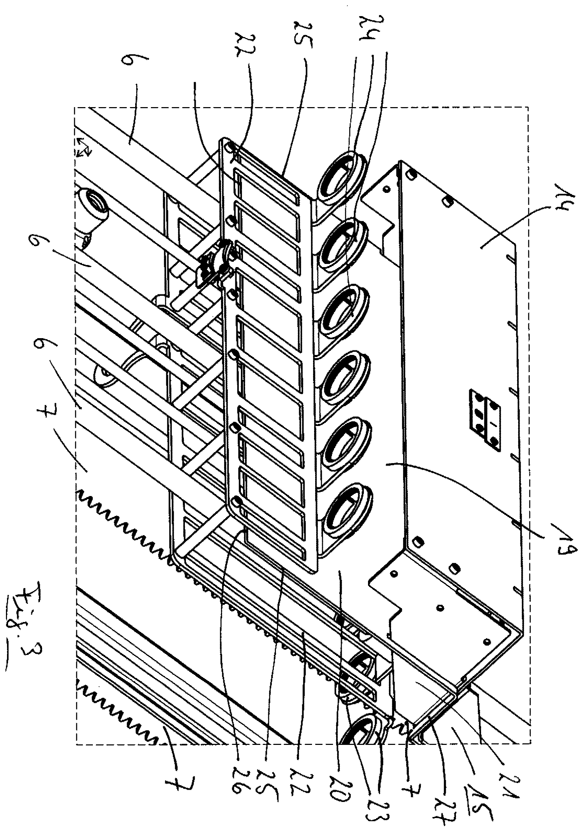

In Figure 2, the module 1 of Figure 1 is shown in another perspective view. In this representation, a guide plate 20 can be seen between the two rows 16 and 17. The guide plate 20 is mounted to the head bracket 15. Further details will be described below with reference to Figure 3.

Figure 3 shows the top section of module 1 without the lamp units 2 and the cover 11 in an enlarged perspective view. The head bracket 15 of this embodiment is combined of several components which are intended to hold and position the lamp units (not shown here). These components comprise among others a box section 21 and a cage 22. The cage 22 holds six retainer rings 23 for the upstream row 16 of lamp units and six retainer rings 24 for the downstream row 17 of lamp units. The guide plate 20 is configured as a solid plate preferably made of sheet metal with a plane portion 19 having two parallel side edges 25 and a bottom edge 26. An angeled portion 27 is angled at 90 degrees relative to the plane portion 19. Angled portion 27 serves as a mounting section for fixing the guide plate 20 to the head bracket 15 in the area of box section 21.

The plane portion 19 is flat and of essentially rectangular form and extends into the space between the two rows 16 and 17 of lamp units.

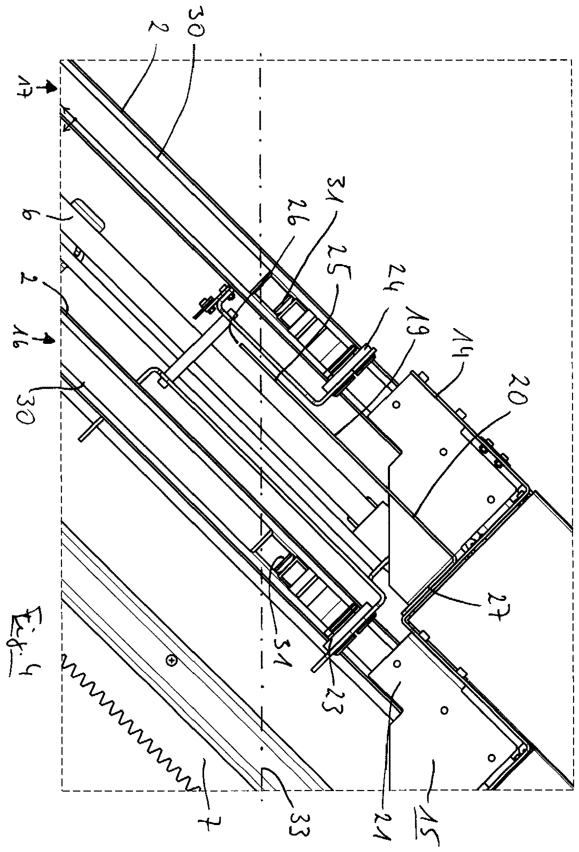

This can better be seen in Figure 4, which is a side view of the section shown in Figure 3, this time with the lamp units 2 in place. The lamp units 2 contain UV lamps 30, each with an upper electrode 31 and a lower electrode (not shown). These electrodes define an emission length or discharge length of the lamp 30. Between the electrodes, the lamp emits a high intensity UV radiation.

A desired upper water level 33 is indicated as a dash-dotted line in Figure 4. In operation, the actual water level may vary, but it is intended that the acutal water level does not significantly exceed upper water level 33, so that all water comes into the reach of the UV radiation.

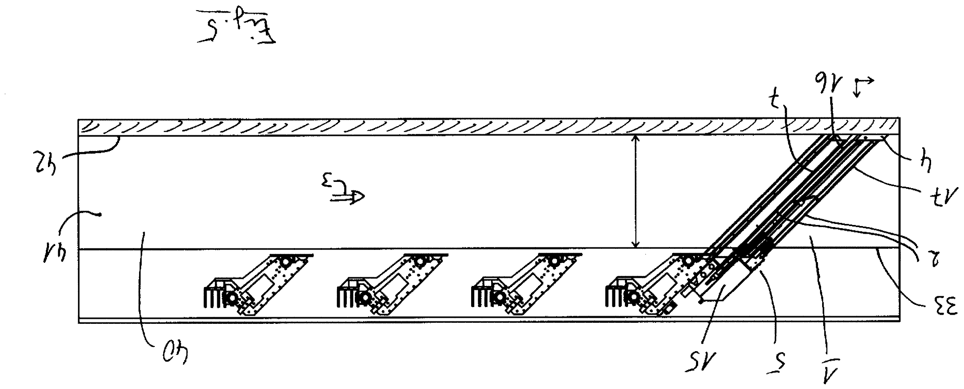

Figure 5 illustrates, in a schematic side view, how the modules 1 are mounted and partially submerged in an open channel 40 with side walls 41 and a bottom wall 42. The bottom bracket 4 is seated on the bottom wall 42 in a way that essentially no water of water flow 3 can pass under bottom bracket 4. All water must pass through the array of lamp units 2 in a stream limited by the side walls 41, bottom wall 42 and upper water level 33. Temporary higher water levels, which may for example occur during heavy rainfalls, may lead to an increase of the water level. This temporary increase must be considered so that no portion of the water stream can pass the modules 1 without sufficient irradiation.

Guide plate 20 is designed and mounted in the way shown especially in Figure 4 in order to ensure that, even if an increased water flow appears, the water must pass under the bottom edge 26 of guide plate 20 so that is necessarily forced to flow below the horizontal plane defined by upper water level 33. If, due to the flow velocity and the geodaetic pressure, the water flow rises again downstream of bottom edge 26, the upflowing portion of the water flow comes close to the level of the upper electrodes 31 and thus into the range of the UV radiation which is emitted in the discharge length.

An increase of the radiation, which is delivered to the upper portion of the water flow, even if the water level exceeds the desired upper water level 33, is achieved. Thus, safety in operation of the UV module and the whole water treatment facility is achieved.

When a module 1 is lifted out of the channel 40 for maintenance purposes, the guide plate 20 can easily be acessed and cleaned, which is not possible with baffle plates in fixed installations.

As shown in Figure 5, in the case of larger channels, several modules 1 can be arranged one behind the other in the flow direction 3. Herein, then each module can be lifted out of the channel individually. Several modules 1 can also be inserted next to one another, transversely to the flow direction, if the channel has a multiple width of the width of a module 1 travese to the direction of flow 3. Modules which sit side by side in the channel have their guide plates 20 aligned in the transverse direction, theis bottom edges 26 forming an essentially straight line. However, the guide plates 20 do not extend of the full width of the modules, so that a gap will remain between the guide plates of two neighbouring modules 1. This gap does not notably decrease the efficiency of irradiation in the water treatment plant. Water streamig through that gap will increase turbulences at the upper water level and therefore quickly and efficiently mix into the stream so that an effective irradiation also of this portion of water can be expected.

## Claims

1. UV water treatment plant with a channel (40) having a bottom wall (42) and two side walls (41), in which the to be treated water flows in a flow direction (3) from an upstream end to a downstream end of the channel (40), wherein the channel (40) is designed to have an upper water level (33), the treatment plant having at least one module (1) which contains
- a number of elongated UV lamp units (2) with an effective UV emission length that are mounted in a head bracket (5) which is close to the upper water level (33), and a bottom bracket (4) which is close to the bottom wall (42) of the channel (40), the head bracket (5) and the bottom bracket (4) being connected via a strut structure (6),
- the effective UV emission length having a lower end near the bottom bracket (4) and an upper end near the head bracket (5),
- wherein the lamp units (2) are orientated in parallel to one another and extend between the head bracket (5) and the bottom bracket (4),
- wherein the lamp units (2) are arranged in a spaced relationship towards each other and in at least two rows (16, 17) in each module (1), which rows (16, 17) are orientated traverse to the flow direction (3) and spaced apart in the flow direction (3), **characterized in that** a guide plate (20) is provided in each module (1), the guide plate (20) being interposed between two rows (16, 17) of lamp units (2) of the module (1), the guide plate (20) having a top section (21), two side edges (25) and a bottom edge (26), wherein
- the bottom edge (26) is below the upper water level (33) and the side edges (25) are spaced apart from the side walls (41) of the channel (40).

2. UV water treatment plant according to Claim 1, **characterized in that** each row (16, 17) of lamp units (2) comprises at least three lamp units.

3. UV water treatment plant according to any one of the preceding claims, **characterized in that** the upper ends (31) of the effective UV emission lengths of the lamp units (2) of each module (1) essentially lie in a horizontal emission plane.

4. UV water treatment plant according to claim 3, **characterized in that** the bottom edge (26) of the guide plate (20) is, in vertical direction, at the same level as the horizontal emission plane or below that plane.

5. UV water treatment plant according to any one of the preceding claims, **characterized in that** only the top section (21) of the guide plate (20) is mounted to the head bracket (5) and that the side edges (25) and the bottom edge (26) extend freely into the channel (40).

6. UV water treatment plant according to any one of the preceding claims, **characterized in that** the top section (21) of the guide plate (20) is mounted to the head bracket (5) in a watertight manner.

7. UV water treatment plant according to any one of the preceding claims, **characterized in that** the head bracket (5) has side faces (15) which define the width of the module (1) in a direction traverse to the flow direction (3), and that the side edges (25) of the guide plate (20) are aligned with the side faces of the head bracket (5) so that the guide plate (20) spans the width of the module (1).

8. UV water treatment plant according to any one of the preceding claims 1 to 6, **characterized in that** the guide plate (20) extends, in a direction traverse to the flow direction (3), between the outer limits of the two lamp units (2) of the module (1) which are closest to the side walls (42) of the channel (40).

9. UV water treatment plant according to any one of the preceding claims, **characterized in that** the bottom edge (26) of the guide plate (20) is serrated, preferably in a saw tooth pattern.

10. UV water treatment plant according to any one of the preceding claims, **characterized in that** the rows (16, 17) of lamp units (2) of a module (1) are staggered traverse to the direction of flow (3) so that, seen in the direction of flow, a downstream lamp unit is positioned to at least partially overlap a gap between two adjacent upstream lamp units.

11. UV water treatment plant according to any one of the preceding claims 9 or 10, **characterized in that** the spacing of the saw tooth pattern matches the distance between the lamp units (2) of the rows (16, 17).

12. UV water treatment plant according to any one of the preceding claims, **characterized in that** the plant comprises a number of modules (1) which are arranged side by side in the channel (40), and that the guide plates (20) of two adjacent modules (1) define a gap between them so that they do not come in contact with each other.

13. UV water treatment plant according to any one of the preceding claims, **characterized in that** a number of modules (1) are arranged neighboring each other transverse to the direction of flow (3) and/or successively in the direction of flow (3).

14. UV water treatment plant according to any one of the preceding claims, **characterized in that** each module (1) has a dedicated drive unit, which is arranged to lift the module (1) out of the channel (40).
